# EUROPEAN PATENT SPECIFICATION

(11) **EP 2 445 162 B1**
(45) Date of publication and mention of the grant of the patent: **23.08.2017**
(21) Application number: 10306160.2
(22) Date of filing: 25.10.2010
(51) Int. Cl.: H04L 29/06

(54) **Method For Adaptive Streaming**
Verfahren zum adaptiven Streaming
Procédé de diffusion adaptative

(43) Date of publication of application: 25.04.2012
(73) Proprietor: ALCATEL LUCENT, 92100 Boulogne-Billancourt (FR)
(72) Inventor: Van Caenegem, Tom, 9860, Schelderode (BE); Sharpe, Randall, Chapel Hill, NC 27516 (US)
(74) Representative: ALU Antw Patent Attorneys

(56) References cited:
- WO-A1-2009/130541
- SANJOY PAUL ET AL: "Reliable Multicast Transport Protocol (RMTP)", IEEE JOURNAL ON SELECTED AREAS IN COMMUNICATIONS, IEEE SERVICE CENTER, PISCATAWAY, US, vol. 15, no. 3, 1 April 1997 (1997-04-01), XP011054624, ISSN: 0733-8716
- LI X ET AL: "Layered video multicast with retransmissions (LVMR): evaluation of hierarchical rate control", INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, vol. 3, 29 March 1998 (1998-03-29), pages 1062-1072, XP010270383, DOI: DOI:10.1109/INFCOM.1998.662916 ISBN: 978-0-7803-4383-2

## Description

### METHOD FOR ADAPTIVE STREAMING

The present invention relates to a method for providing a streaming service from a server arrangement to at least one client of a plurality of clients.Published International Patent Application WO2009/130541 discloses a method for switching from a unicast transmission of a program to a multicast transmission of the program.

The paper "Reliable Multicast Transport Protocol (RMTP)" by Sanjoy Paul, Krishan K. Sabnani, John C.-H. Lin and Supratik Bhattacharyya, IEEE Journal on Selected Areas in Communications, Vol. 15, Nr 3, April 1997, pp 407-421, presents the design, implementation and performance of a reliable multicast transport protocol RMTP. RMTP is based on a hierarchical structure in which receivers are grouped into local regions or domains and in each domain there is a special receiver called a designated receiver (DR) which is responsible for sending acknowledgments periodically to the sender, for processing acknowledgments from receivers in its domain, and for retransmitting lost packets to the corresponding receivers. Since lost packets are recovered by local retransmissions as opposed to retransmissions from the original sender, end-to-end latency is significantly reduced, and the overall throughput is improved as well. Also since only the DR's send their acknowledgments to the sender, instead of all receivers sending their acknowledgments to the sender, a single acknowledgment is generated per local region, and this prevents acknowledgment implosion. Receivers in RMTP send their acknowledgments to the DR's periodically, thereby simplifying error recovery. In addition, lost packets are recovered by selective repeat retransmissions, leading to improved throughput at the cost of minimal additional buffering at the receivers.

The paper "Layered Video Multicast with Retransmissions : Evaluation of Hierarchical Rate Control" by Xue Li, Sanjoy Paul and Mostafa Ammar, presented at Infocom 98, and published in the 17th annual joint conference of the IEEE computer and communications societies proceedings, IEEE San Francisco, XP010270383, pp1062-1072, ISBN 978-0-7803-4383-2, discloses a system for distributing video using layered coding over the Internet. The two key contributions of the system are (1) improving the quality of reception within each layer by retransmitting lost packets given an upper bound on recovery time and applying an adaptive playback point scheme to help achieve more successful retransmission, and (2) adapting to network congestion and heterogeneity using hierarchical rate control mechanism. In contrast to existing sender-based and receiver-based rate control in which the entire information about network congestion is either available at the sender or replicated at the receivers, the hierarchical rate control mechanism distributes the information between the sender, receivers and some agents in the network in such a way that each entity maintains only the information relevant to itself.

Adaptive streaming is a solution by which video content is divided into fragments, and where different resolutions or quality levels for each video fragment are made available by a server e.g. N resolutions are available for each video fragment. A client continuously monitors the amount of bandwidth available, and will e.g. http request/download that fragment representing a particular resolution of the video for which there is sufficient bandwidth available on the connection between the client and the server. By requesting fragments one after the other at possibly different resolutions, this can result in a smooth video experience even though the bandwidth varies. This is usually done via a unicast connection and accompanying protocol between the client and the server.

The above solution could be used for live streaming as well. However for very popular live events, which can attract a very large number of clients, the unicast solution may not be sustainable anymore for a number of reasons. A first one relates to the bandwidth consumption which could exceed the available capacity on the network links downstream of the server. In addition the peak performance limit of the server or the network can be reached. Cost for delivering this unicast traffic may also become too high for the live content service provider as multiple networks and peering links may have to be crossed.

It is therefore an object of embodiments of the present invention to provide a solution which solves the aforementioned problems.

According to embodiments of the present invention this object is achieved by means of a method for providing a streaming service from a server arrangement to at least one client of a plurality of clients, the method comprising a delivery of said streaming service from said server arrangement to said at least one client via a unicast connection, a step of communicating, by said server arrangement to all clients of said plurality of the availability of at least one multicast channel, a step of connecting, by said at least one client to one of said at least one multicast channels, characterized in that said streaming service is an adaptive streaming service and in that during said multicast connection said at least one client still remains connected to said server arrangement via said unicast connection.

In this way, from the client perspective, an initial unicast streaming mode can be followed by a multicast streaming mode, upon announcing this possibility by the server arrangement to all clients via signaling messages from the server arrangement to all clients e.g. over a unicast signaling connection or already over a multicast channel, the latter being either a dedicated multicast signaling channel or a multicast channel for both providing signaling metadata as well as streaming content. This announcing or communication of the multicast mode may e.g. be done upon detection, by the server arrangement, of overload conditions. As multicast data streaming is much more efficient in these situations where a lot of clients are in need of the same data simultaneously, this switchover from unicast to multicast streaming will then solve the overload problems at the server arrangement and/or in the network.

However, at any time the client may still request data and metadata from the Unicast Server included in the server arrangement over the unicast connection as the client remains connected to the unicast server via the unicast connection too, without necessarily having to request and/or to receive data and metadata. This presents and additional advantage in case problems are encountered at the client during this multicast mode. Indeed, the availability of the active unicast communication channel will enable the client to respond much quicker to some further problems encountered during the multicast transmission, enabling e.g. a quick recovery from lost data errors during the multicast transmission.

In an embodiment the communication of the availability of the multicast mode by said server arrangement takes place upon detecting unicast delivery problems by the server arrangement. This communication can thus take place via signaling using the unicast connection to the client, or via a separate multicast signaling channel. This communication may thus instruct the client to join one of the offered multicast channels carrying data and optionally also metadata, implying that the client should no longer expect its data requests being serviced over the unicast connection.

However, because of the remaining availability of the unicast connection, error events related to at least one missing packet at said at least one client while receiving packets in multicast mode, may still be communicated to said server via the unicast protocol pertaining to said unicast connection .

This remaining availability of the unicast signaling and data channel can then result in a smooth error recovery as the missing data can now quickly be provided from the server arrangement to the client via this unicast data channel, while the signaling itself can take place using the unicast signaling channel.

I n another embodiment said at least one client is further adapted to determine the cause of said at least one missing packet such that , in case said at least one client has e.g. determined bandwidth problems on said multicast channel, said at least one client can switch to a different multicast mode.

This switch over from one multicast connection to another multicast connection can take place directly or via an intermediate unicast data delivery stage.

The present invention also relates to embodiments of a server arrangement and a client, for cooperating to realize the aforementioned embodiments of the method.

Further variants are set out in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig. 1 shows an embodiment of a server arrangement coupled to a plurality of clients and adapted to provide the switchover from unicast to multicast
Fig. 2 shows a detailed embodiment of a method for a client implementation capable of receiving Http Adaptive Streaming data and metadata related to the same content/stream either in unicast mode or in multicast mode, and which explains the switching over from unicast to multicast mode and vice versa.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

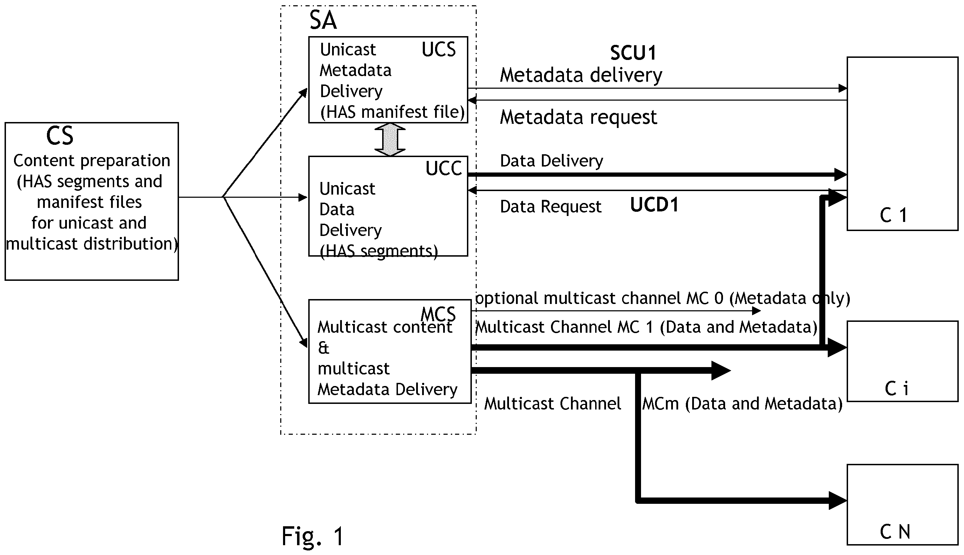

Fig. 1 shows a server arrangement SA, which included a unicast content server UCC , a unicast signaling server UCS , and a multicast source MCS. These are generally part of different physical servers, and can thus be located at large distances from each other. The different modules UCS, UCC and MCS are however linked together via a common content and associated content description , often denoted as metadata, which they all receive from a common content/metadata source CS. All modules can be coupled to a plurality of clients denoted C1,...,Ci to CN. In the specific case of the http adaptive streaming protocol being used , these clients are thus HAS clients. Both unicast signaling server UCS and Unicast content server UCC can also be incorporated into one single unicast server. However, as already mentioned, in other embodiments they can be part of two different units. The multicast source MCS can generate multiple multicast streams. Such a multicast source MCS is generally able to provide the multicast signaling metadata as well as the content to the devices coupled to it. The metadata may be optionally also be signaled in a dedicated signaling multicast channel. This situation is shown in Fig. 1 where such an optional multicast Channel MC0 is provided and which is adapted to only transport metadata to the clients..In other embodiments all multicast metadata is provided through the common data and signaling multicast channels MC1 to MCm. Both unicast metadata server UCS and multicast source MCS can thus provide metadata, being signaling data, thereby enabling a client to connect to and receive different representations of the same stream/content, be it in pull mode for the unicast server model, and in push mode for the multicast source model .

The multicast source MCS is thus also part of the server arrangement SA. In general the multicast source comprises a different hardware and software device compared to the unicast servers, and is in general, but not necessary, located at a different location.

Each client C1 to CN can thus be considered as being coupled to the server arrangement SA via a unicast signaling channel, a unicast data channel and one or more multicast channels which serve to exchange both multicast signaling and data. For depicted client 1 these channels are respectively denoted SCU1 for the unicast signaling channel for client 1 , UCD1 for unicast data channel for client 1 and MC1 for multicast channel for client 1. In the embodiment of Fig. 1 Client 1 is also connected to MCS via the multicast signaling channel MC0.

Depending on the mode that is used for the delivery of the data from the server arrangement SA towards the clients, either one of the signaling channels is used. Thus in case data provision takes place in unicast mode, the unicast signaling channel is used. In case data provisioning takes place in multicast mode, the multicast signaling channel is used, either being the dedicated signaling channel as depicted in the embodiment of Fig. 1, either being one of the usual data/signaling multicast channels MC1 to MCm..

In case of the HAS protocol, the unicast content server UCC is adapted to send HAS segments to HAS clients in case a HAS client had requested, via the unicast signaling channel, at any time those representations of the desired content for which sufficient bandwidth is available. Such a request is also denoted a "pull" operation. The unicast signaling server UCS is further adapted to generate metadata , being signaling data, that are continuously refreshed. These signaling metadata provides among others the localization information of the content data fragments at server UCC.. In parallel the multicast source may also provide signaling metadata.

The unicast and the multicast data connections are shown as separate data channels on this figure. However, they will usually pertain to the same physical data communication link at the client side which can be any type of data communication link e.g. wired or wireless, via satellite, fiber,... using any type of carrier or communication protocol supporting both unicast and multicast data transmission. Similarly the unicast signaling metadata connection can be provided by means of the same physical connection between the client and the server, as the one that provided the unicast data transfer. The difference between these connections is only situated at the protocol level Server and client may thus be coupled or interconnect by any type of communications network, being fixed or mobile or satellite,... supporting these interconnections.

Data transfer usually starts in unicast mode between the server and the different clients, as this mode provides for the highest versatility. The metadata, including the location information of the unicast data and the location information of the UCC is retrieved by the client by connecting to the unicast signaling server UCS. Data transfer is usually initiated on request of the client, after parsing and interpreting the metadata information.

The unicast data delivery server UCC will accordingly start transmitting data, in unicast mode to the requesting client, via the unicast data connection. For adaptive streaming purposes several content representations can be available, related to a particular resolution. The client may request at any time those representations on the basis of the available bandwidth on the communication link between server and client and available resources at the client. These embodiments will be described in further paragraphs.

In parallel the multicast source MCS also provides the clients with metadata information mentioning the availability of one or more multicast channels for data streaming. In some embodiments several of such multicast channels are available, possibly , but not necessarily related to the different unicast channels or connections in terms of available bandwidth. In other embodiments only one multicast channel is available.

A client may thus learn from the metadata received from the multicast source MCCS , that the same content in either one or more representations is also available in multicast channels sourced by this source .

The client may thereupon decide to connect to a multicast channel and no longer retrieve its data from the unicast content delivery server UCC. This decision may be taken on the basis of a client decision/policy algorithm e.g. because the server UCS responds with an error response to a unicast data request which indicates to the client it should connect to a multicast stream.

During this switch over from unicast connection mode to a multicast mode, a client should not experience any disturbance of the viewing experience in case the data concerns video.

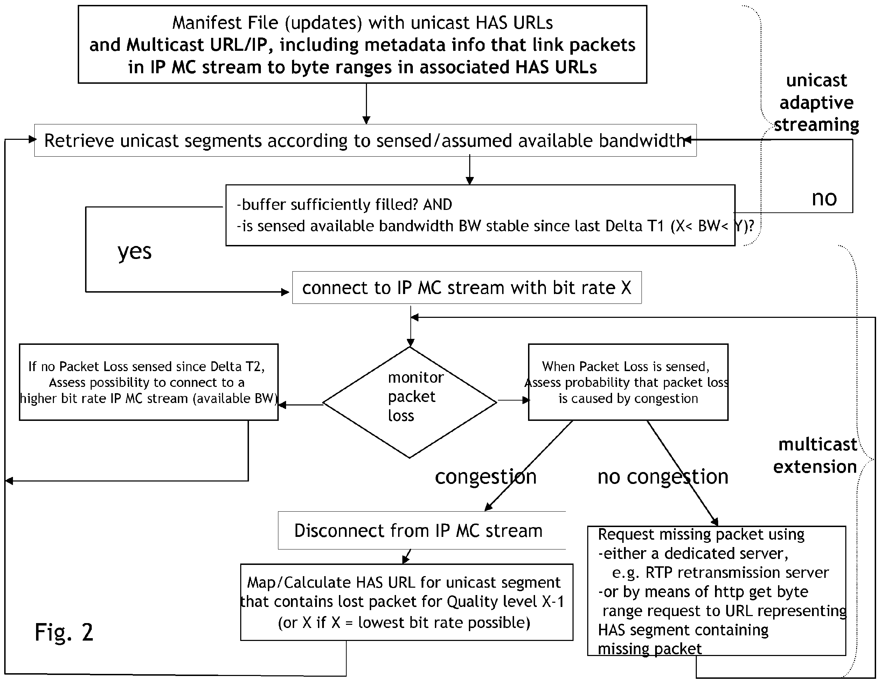

Furthermore, when a client is connected to a multicast stream, it should still be possible for this client to recover from accidental packet loss such that the client can request any missing data in unicast mode. An embodiment for realizing this feature will be discussed with reference to Fig. 2.

In case multiple multicast channels are provided that transport the same content but in a different representation format, switchover from one multicast channel to another one should also be possible on a client's initiative. Again this should not interrupt the normal data e.g. video rendering due to loss of important packets or information during this switch-over were lost. This could be accommodated by e.g. having a client always first connect to the unicast content server UCC in unicast mode, thereby requesting certain content data, after leaving the previous multicast channel and before connecting to the next multicast channel.

Fig. 2 shows a detailed embodiment of the method, for an implementation using http adaptive streaming, abbreviated by HAS, protocol. This embodiment also provides for a multitude of unicast and multicast modes, each pertaining to a particular bandwidth constraint of the link between the client and the server and between the multicast source and the clients.

This embodiment of the method starts with the provision of the URLs, with URL being the abbreviation of universal resource locator, information to the different clients, in accordance with this HAS protocol. This concerns signaling messages, including metadata information, meaning that it provides overhead data with respect to the actual data to be provided. This overhead data in this case thus contains identifiers or locators of where to retrieve the different data according to the different modes, both in unicast and in multicast. This overhead or signaling data is provided via both unicast and multicast signaling channels respectively SCU1 to SCUN (the latter not shown on Fig. 1) and MC0 for the multicast data, to all clients, and is called "manifest files".

These manifest files include URLs and metadata for the next video fragments at all available resolutions, and are continuously refreshed in the MultiCast stream as well as in the unicast signaling data. In Fig. 2 these are thus denoted "manifest files" , and thus may contain the URLs associated with the available data fragments , may also contain corresponding locations inside the Multicast stream, e.g. by means of a RTP SequenceNumber range, when the RTP protocol is used to transport the data over Multicast. This RTP sequence number range can indicate the RTP SequenceNumber in the MultiCast stream, abbreviated in Fig. 2 by MC stream, where the associated video fragment data starts and the RTP SequenceNumber in the MultiCast stream where the associated video fragment data ends. This can be advantageous for retransmission purposes : when detecting one or more missing RTP packet(s), based on this manifest information the client can map the missing RTP SN into a byte range request for a fragment that can be requested on the unicast (http) connection, when keeping track of how much data (in bytes) of the corrupt fragment has already been received by the client over MultiCast. This will be further explained in a later part of this document.

Clients start retrieving data in unicast mode. In case several unicast modes are available, these clients will immediately retrieve the data according to the mode suited to their bandwidth constraints, at the correct URLs , in accordance to the http adaptive streaming protocol.

The clients further continuously monitor whether their buffer is sufficiently full. If this is not the case, this is probably indicative of a lack of sufficient bandwidth on the link between the client and the server. In that case, the client will normally start requesting next segments at another URL with a lower bitrate encoded representation of the content, for retrieving the next fragments

In case the client buffer was sufficiently filled over a longer time period, the client further checks whether the available bandwidth remains sufficiently constant or stable. If both conditions are fulfilled, meaning that the communications link between server and client has enough bandwidth and this bandwidth is available for a sufficiently long period, e.g. 10 seconds, then the client can decide to switch to the multicast mode for retrieving the data. In case only one multicast connection is available, the bandwidth of this connection thus preferentially has to be lower or equal than the bandwidth available on the link between the server and the client. In figure 2, this bandwidth is denoted as *"X"*

The client then retrieves the data in multicast mode by providing e.g. an IGMP/MLP message, being the abbreviation of Internet Group Multicast Protocol/Multicast Listening Protocol, to the network between the client and the multicast source. The client further continuously checks for packet losses. This message is transmitted to the server arrangement SA.

In case such as packet loss is detected, the client performs an analysis to check whether this packet loss was due to congestion problems or not. If the client estimates that congestion is the root cause of the packet loss, the client will disconnect from the multicast mode, and continue on an appropriate unicast mode in accordance to the measured bandwidth. In order to retrieve the data starting from the lost packet, the client has to determine the correct URL from where to retrieve this particular packet too. A possible way to perform this is by embedding the mapping between unicast content locations e.g. URL with byte ranges, and multicast content locations ,e.g. MultiCast URL and RTP Sequence numbers, in the manifest file metadata, as was previously mentioned.

In case the client detected packet loss, but anyhow determined that this was not due to any congestion problems, the client may simply request this missing packet. This can be done via the use of a dedicated retransmission server, e.g. an RTP retransmission server. Alternatively the client can request the missing packet via a http get method with byte range to the unicast URL of the associated data fragment.

In case no packet loss is observed, an in case several multicast channels are provided, the client can check whether or not it might be opportune to even connect to a multicast channel that streams a data representation at a higher bit rate.

In order to enable a similar smooth experience as with unicast http adaptive streaming implying no service interruption like display stalling and frame/GOP skip, no video fragments or data should be lost when switching from one MultiCast stream which carries a certain resolution of the contents to another MultiCast stream carrying a different resolution. In practice though, video fragments will be incomplete when leaving a MultiCast stream and then joining another MultiCast stream directly.

A possible solution is then for the client to first request to the unicast server a (complete) fragment of the other resolution after leaving the previous MultiCast and before joining the new MultiCast stream, where the client waited for leaving the 1^{st} multicast till all remaining data of the last received fragment was received. Alternatively it is possible to use retransmissions ,either by means of RTP/RTCP protocol or by means of http as explained above, when switching to a different resolution MultiCast stream. In this way a direct switch from multicast X to multicast Y is obtained, while any missing packet is retrieved in unicast mode. This is a reactive means to get missing data from the 1^{st} fragment (partly) received in the new MC stream, where the client waited for leaving the 1^{st} multicast till all data of a data fragment was received.

While the principles of the invention have been described above in connection with specific apparatus, it is to be clearly understood that this description is made only by way of example and not as a limitation on the scope of the invention, as defined in the appended claims.

## Claims

1. Method for providing a streaming service from a server arrangement (SA) to at least one client (C1) of a plurality of clients (C1,...,Cn), the method comprising a delivery of said streaming service from said server arrangement (SA) to said at least one client (C1) via a unicast connection (SCU1,UCD1), a step of communicating, by said server arrangement (SA) to all clients (C1,...Cn) of said plurality of the availability of at least one multicast channel (MC1,..., MCm) , a step of connecting, by said at least one client (C1) to one (MC1) of said at least one multicast channel (MC1,..., MCn),
**characterized in that** said streaming service is an adaptive streaming service and **in that** during said multicast connection said at least one client still remains connected to said server arrangement (SA) via said unicast connection (SCU1, UCD1).

2. Method according to claim 1 wherein said communicating step by said server arrangement (SA) takes place upon detecting unicast delivery problems by said server arrangement (SA).

3. Method according to claim 1 or 2 wherein said communicating step by said server arrangement (SA) is performed via a multicast signaling channel (MC0).

4. Method according to any of the previous claims 1-3 wherein said at least one multicast channel (MC1,...,MCn) is adapted to transport both signaling metadata and content.

5. Method according to any of the claims 1 to 4 wherein , in case of an error event related to at least one missing packet by said at least one client while receiving in multicast mode, said error event is communicated to said server arrangement (SA) via a unicast protocol pertaining to a unicast mode on said unicast connection (SCU1, UCC1)..

6. Method according to claim 5 wherein, upon receipt by said server arrangement (SA) of said error event communication, the server arrangement (SA) is adapted to identify the at least one missing packet for delivery to said at least one client via said at least one unicast channel (UC1) .

7. Method according to claim 5 wherein, in case said at least one client has determined that no bandwidth problems occur on said multicast channel, said at least one client is adapted to request another multicast channel with higher quality.

8. Server arrangement (SA) adapted to receiving content from a content source (CS) and for providing a streaming service of said content to at least one client (C1) of a plurality of clients (C1,...,CN) coupled to said server arrangement (SA) , via a unicast connection (SCU1,UCD1), said server arrangement being further adapted to communicate to all clients (C1,...Cn) of said plurality of the availability of at least one multicast channel (MC1,..., MCm) , to provide the multicast data delivery upon receiving from said at least one client (C1) a confirmation of connection to one of said at least one multicast channel (MC1),
**characterized in that** said streaming service is an adaptive streaming service and **in that** said said server is further adapted to, during the multicast delivery of data, still receive from said at least one client messages over said unicast connection (SCU1, UCD1).

9. Server arrangement (SA) according to claim 8 being further adapted to communicate the availability of said at least one multicast channel upon detecting unicast delivery problems to said at least one client (C1).

10. Server arrangement (SA) according to claim 8 or 9 being further adapted to communicate the availability of said at least one multicast channel via a multicast signaling channel (MC0).

11. Server arrangement (SA) according to any of the previous claims 8 to 10, being further adapted to receive from said client (C1) an error event communication related to a missing packet at said client while receiving in multicast mode, the server arrangement (SA) being further adapted to identify the at least one missing packet for delivery to said at least one client (C1) via said at least one unicast channel (UC1) .

12. Client (C1) adapted to receive a streaming service of a server arrangement (SA) via a unicast connection (SCU1, UCD1), said client (C1) being further adapted to receive a communication from the server arrangement (SA) announcing the availability of at least one multicast channel (MC1,..., MCm) , said client being further adapted to connect to one (MC1) of said at least one multicast channel (MC1,..., MCn), **characterized in that** said streaming service is an adaptive streaming service and said client is further adapted to, when connected to said at least one multicast channel still remaining connected to said server arrangement (SA) via said unicast connection (SCU1, UCD1).

13. Client (C1) according to claim 12, being further adapted to communicate an error event related to at least one missing packet while receiving in multicast mode, to said server arrangement (SA) via a unicast protocol pertaining to a unicast mode on said unicast connection (SCU1, UCD1)..

14. Client (C1) according to any of the previous claims 12-13, being further adapted to request another multicast channel with higher quality, upon detecting no problems during said multicast delivery.

## Patentansprüche

1. Verfahren zum Bereitstellen eines Streaming-Dienstes von einer Serveranordnung (SA) für mindestens einen Client (C1) von einer Vielzahl von Clients (C1,...,Cn), wobei das Verfahren die Übermittlung von besagtem Streaming-Dienst von besagter Serveranordnung (SA) zu mindestens einem Client (C1) über eine Unicast-Verbindung (SCU1, UCD1) umfasst, sowie einen Schritt des Kommunizierens durch besagte Serveranordnung (SA) an alle Clients (C1,...,Cn) der besagten Vielzahl der Verfügbarkeit von mindestens einem Multicast-Kanal (MC1,..., MCm), sowie einen Schritt des Verbindens durch den mindestens einen Client (C1) zu einem (MC1) des mindestens einen Multicast-Kanals (MC1,...,MCn),
**dadurch gekennzeichnet, dass** besagter Streaming-Dienst ein anpassungsfähiger Streaming-Dienst ist und dass während besagter Multicast-Verbindung der mindestens eine Client weiterhin mit besagter Serveranordnung (SA) über besagte Unicast-Verbindung (SCU1, UCD1) verbunden bleibt.

2. Verfahren nach Anspruch 1, wobei besagter Kommunikations-Schritt durch besagte Serveranordnung (SA) beim Erkennen von Unicast-Lieferungsproblemen durch besagte Serveranordnung (SA) erfolgt.

3. Verfahren nach Anspruch 1 oder 2, wobei besagter Kommunikations-Schritt durch besagte Serveranordnung (SA) über einen Multicast-Signalisierungskanal (MC0) durchgeführt wird.

4. Verfahren nach einem beliebigen der vorstehenden Ansprüche 1-3, wobei der mindestens eine Multicast-Kanal (MC1,...,MCn) zum Transport von sowohl Signalisierungs-Metadaten als auch von Inhalt angepasst ist.

5. Verfahren nach einem der Ansprüche 1 bis 4, wobei, im Fall eines Fehler-Ereignisses bezogen auf mindestens ein fehlendes Paket durch den mindestens einen Client während des Empfangens im Multicast-Modus, besagtes Fehler-Ereignis an besagte Serveranordnung (SA) über ein Unicast-Protokoll kommuniziert wird, das zu einem Unicast-Modus auf besagter Unicast-Verbindung (SCU1, UCD1) gehört.

6. Verfahren nach Anspruch 5, wobei nach Empfang durch besagte Serveranordnung (SA) der besagten Fehler-Ereignis-Kommunikation die Serveranordnung (SA) angepasst ist zum Identifizieren von dem mindestens einen fehlenden Paket zur Lieferung an den mindestens einen Client über den mindestens einen Unicast-Kanal (UC1).

7. Verfahren nach Anspruch 5, wobei, falls der mindestens eine Client bestimmt hat, dass keine Bandbreitenprobleme auf besagtem Multicast-Kanal aufgetreten sind, der mindestens eine Client angepasst wird zur Anforderung eines weiteren Multicast-Kanals mit höherer Qualität.

8. Serveranordnung (SA), angepasst für das Empfangen von Inhalt von einer Inhaltsquelle (CS) und zum Bereitstellen eines Streaming-Dienstes des besagten Inhalts zu mindestens einem Client (C1) von einer Vielzahl von Clients (C1,...,Cn), gekoppelt mit besagter Serveranordnung (SA) über eine Unicast-Verbindung (SCU1, UCD1), wobei besagte Serveranordnung ferner angepasst ist zum Kommunizieren an alle Clients (C1,...,Cn) der besagten Vielzahl der Verfügbarkeit von mindestens einem Multicast-Kanal (MC1,...,MCm), zum Bereitstellen der Multicast-Datenlieferung nach dem Empfang von dem mindestens einen Client (C1) einer Bestätigung der Verbindung zu einem des mindestens einem Multicast-Kanals (MC1),
**dadurch gekennzeichnet, dass** besagter Streaming-Dienst ein anpassungsfähiger Streaming-Dienst ist und dass besagter Server ferner angepasst ist, um während der Multicast-Lieferung von Daten weiterhin Nachrichten von dem mindestens einen Client über besagte Unicast-Verbindung (SCU1, UCD1) zu empfangen.

9. Serveranordnung (SA) nach Anspruch 8, die ferner angepasst ist zum Kommunizieren der Verfügbarkeit von dem mindestens einen Multicast-Kanal nach Erkennen der Unicast-Lieferungsprobleme an den mindestens einen Client (C1).

10. Serveranordnung (SA) nach Anspruch 8 oder 9, die ferner angepasst ist zum Kommunizieren der Verfügbarkeit von dem mindestens einen Multicast-Kanal über einen Multicast-Signalisierungskanal (MC0).

11. Serveranordnung (SA) nach einem beliebigen der vorstehenden Ansprüche 8 bis 10, die ferner angepasst ist, um von besagtem Client (C1) eine Fehler-Ereignis-Kommunikation bezogen auf ein fehlendes Paket bei besagtem Client zu empfangen, während sie im Multicast-Modus empfängt, wobei die Serveranordnung (SA) ferner angepasst ist zum Identifizieren von mindestens einem fehlenden Paket zur Lieferung an den mindestens einen Client (C1) über den mindestens einen Unicast-Kanal (UC1).

12. Client (C1), angepasst zum Empfangen eines Streaming-Dienstes einer Serveranordnung (SA) über eine Unicast-Verbindung (SCU1, UCD1), wobei besagter Client (C1) ferner angepasst ist zum Empfangen einer Kommunikation von der Serveranordnung (SA), welche die Verfügbarkeit von mindestens einem Multicast-Kanal (MC1,...,MCm) ankündigt, wobei besagter Client ferner angepasst ist zum Verbinden zu einem (MC1) des mindestens einen Multicast-Kanals (MC1,...,MCn), **dadurch gekennzeichnet, dass** der besagte Streaming-Dienst ein anpassungsfähiger Streaming-Dienst ist und besagter Client ferner angepasst ist, um, wenn er mit dem mindestens einen Multicast-Kanal verbunden ist, weiterhin mit der besagten Serveranordnung (SA) über besagte Unicast-Verbindung (SCU1, UCD1) verbunden bleibt.

13. Client (C1) nach Anspruch 12, der ferner angepasst ist zum Kommunizieren eines Fehler-Ereignisses bezogen auf mindestens ein fehlendes Paket, während er im Multicast-Modus empfängt, an besagte Serveranordnung (SA) über ein Unicast-Protokoll, das zu einem Unicast-Modus auf besagter Unicast-Verbindung (SCU1, UCD1) gehört.

14. Client (C1) nach einem beliebigen der vorstehenden Ansprüche 12-13, der ferner angepasst ist zum Anfordern eines weiteren Multicast-Kanals mit höherer Qualität, wenn keine Probleme während besagter Multicast-Lieferung erkannt werden.

## Revendications

1. Procédé de fourniture d'un service de diffusion en continu à partir d'un dispositif de serveur (SA) vers au moins un client (C1) d'une pluralité de clients (C1...Cn), le procédé comprenant la distribution dudit service de diffusion en continu à partir dudit dispositif de serveur (SA) vers ledit ou lesdits clients (C1) via une connexion en monodiffusion (SCU1, UCD1), une étape de communication, par ledit dispositif de serveur (SA) vers tous les clients (C1...Cn) de ladite pluralité de la disponibilité d'au moins un canal de multidiffusion (MC1...MCm), une étape de connexion, par ledit ou lesdits clients (C1) à l'un (MC1) desdits canaux de multidiffusion (MC1...MCn),
**caractérisé en ce que** ledit service de diffusion en continu est un service de diffusion en continu adaptatif et **en ce que** durant ladite connexion en multidiffusion ledit ou lesdits clients restent toujours connectés audit dispositif de serveur (SA) via ladite connexion en monodiffusion (SCU1, UCD1).

2. Procédé selon la revendication 1 dans lequel ladite étape de communication par ledit dispositif de serveur (SA) est effectuée lors de la détection de problèmes de distribution en monodiffusion par ledit dispositif de serveur (SA).

3. Procédé selon la revendication 1 ou 2 dans lequel ladite étape de communication par ledit dispositif de serveur (SA) est réalisée via un canal de signalisation de multidiffusion (MC0).

4. Procédé selon l'une quelconque des revendications 1 à 3 dans lequel ledit ou lesdits canaux de multidiffusion (MC1...MCn) sont adaptés pour transporter à la fois les métadonnées de signalisation et le contenu.

5. Procédé selon l'une quelconque des revendications 1 à 4 dans lequel, en cas d'événement d'erreur lié à au moins un paquet manquant au niveau dudit ou desdits clients pendant la réception en mode de multidiffusion, ledit événement d'erreur est communiqué audit dispositif de serveur (SA) via un protocole de monodiffusion relatif à un mode de monodiffusion sur ladite connexion en monodiffusion (SCU1, UCD1).

6. Procédé selon la revendication 5 dans lequel, à la réception par ledit dispositif de serveur (SA) de ladite communication d'un événement d'erreur, le dispositif de serveur (SA) est adapté pour identifier le ou les paquets manquants pour la distribution audit ou auxdits clients via ledit ou lesdits canaux de monodiffusion (UC1).

7. Procédé selon la revendication 5 dans lequel, au cas où ledit ou lesdits clients ont déterminé qu'aucun problème de bande passante n'est rencontré sur ledit canal de multidiffusion, ledit ou lesdits clients sont adaptés pour demander un autre canal de multidiffusion de qualité supérieure.

8. Dispositif de serveur (SA) adapté pour recevoir un contenu en provenance d'une source de contenu (CS) et pour fournir un service de diffusion en continu dudit contenu à au moins un client (C1) d'une pluralité de clients (C1...Cn) reliés audit dispositif de serveur (SA), via une connexion en monodiffusion (SCU1, UCD1), ledit dispositif de serveur étant en outre adapté pour communiquer à tous les clients (C1...Cn) de ladite pluralité la disponibilité d'au moins un canal de multidiffusion (MC1...MCm), pour fournir la distribution de données de multidiffusion à la réception en provenance dudit ou desdits clients (C1) d'une confirmation de connexion à l'un desdits canaux de multidiffusion (MC1),
**caractérisé en ce que** ledit service de diffusion en continu est un service de diffusion en continu adaptatif et **en ce que** ledit serveur est en outre adapté pour, durant la distribution des données en multidiffusion, recevoir toujours en provenance dudit ou desdits clients des messages sur ladite connexion en monodiffusion (SCU1, UCD1).

9. Dispositif de serveur (SA) selon la revendication 8 adapté en outre pour communiquer la disponibilité dudit ou desdits canaux de multidiffusion lors de la détection de problèmes de distribution en monodiffusion audit ou auxdits clients (C1).

10. Dispositif de serveur (SA) selon la revendication 8 ou 9 adapté en outre pour communiquer la disponibilité dudit ou desdits canaux de multidiffusion via un canal de signalisation de multidiffusion (MC0).

11. Dispositif de serveur (SA) selon l'une quelconque des revendications 8 à 10, adapté en outre pour recevoir dudit client (C1) la communication d'un événement d'erreur relatif à un paquet manquant au niveau dudit client lors de la réception en mode multidiffusion, le dispositif de serveur (SA) étant en outre adapté pour identifier le ou les paquets manquants pour la distribution audit ou auxdits clients (C1) via ledit ou lesdits canaux de monodiffusion (UC1).

12. Client (C1) adapté pour recevoir un service de diffusion en continu d'un dispositif de serveur (SA) via une connexion en monodiffusion (SCU1, UCD1), ledit client (C1) étant en outre adapté pour recevoir une communication du dispositif de serveur (SA) annonçant la disponibilité d'au moins un canal de multidiffusion (MC1...MCm), ledit client étant en outre adapté pour se connecter à l'un (MC1) desdits canaux de multidiffusion (MC1...MCn), **caractérisé en ce que** ledit service de diffusion en continu est un service de diffusion en continu adaptatif et ledit client est en outre adapté pour, lorsqu'il est connecté audit ou auxdits canaux de multidiffusion, rester toujours connecté audit dispositif de serveur (SA) via ladite connexion en monodiffusion (SCU1, UCD1).

13. Client (C1) selon la revendication 12, adapté en outre pour communiquer un événement d'erreur relatif à au moins un paquet manquant lors de la réception en mode de multidiffusion, audit dispositif de serveur (SA) via un protocole de monodiffusion relatif à un mode de monodiffusion sur ladite connexion de monodiffusion (SCU1, UCD1).

14. Client (C1) selon l'une quelconque des revendications 12 à 13, adapté en outre pour demander un autre canal de multidiffusion de qualité supérieure, lorsqu'il ne détecte aucun problème durant ladite distribution en multidiffusion.
